# EUROPÄISCHE PATENTSCHRIFT

(11) **EP 1 046 551 B1**
(45) Veröffentlichungstag und Bekanntmachung des Hinweises auf die Patenterteilung: **18.06.2003**
(21) Anmeldenummer: 00108008.4
(22) Anmeldetag: 19.04.2000
(51) Int. Cl.: B60R 21/20

(54) **Knie-Rückhaltevorrichtung**
Knee protection device
Dispositif de protection des genoux

(30) Priorität: 22.04.1999 DE 29907163 U; 01.09.1999 DE 29915365 U
(43) Veröffentlichungstag der Anmeldung: 25.10.2000
(73) Patentinhaber: TRW Occupant Restraint Systems GmbH & Co. KG, 73553 Alfdorf (DE)
(72) Erfinder: Schultz, Dirk, 73527 Schwäbisch Gmünd (DE); Heilig, Alexander, 73550 Wissgoldingen (DE); Zischka, Gerd, 73527 Schwäbisch Gmünd (DE); Freisler, Werner, 89551 Königsbronn (DE); Kleinmann, Bernd, 73527 Schwäbisch Gmünd (DE)
(74) Vertreter: Kitzhofer, Thomas, Dipl.-Ing.

(56) Entgegenhaltungen:
- DE-C- 19 730 397
- US-A- 5 536 043
- PATENT ABSTRACTS OF JAPAN vol. 018, no. 245 (M-1603), 11. Mai 1994 (1994-05-11) & JP 06 032195 A (NISSAN MOTOR CO LTD), 8. Februar 1994 (1994-02-08)

## Beschreibung

Die Erfindung betrifft eine Knic-Rückhaltevorrichtung für Fahrzeuge, mit einer Lastverteilerplatte für den direkten Kontakt mit den Knien des Insassen und einer Antriebseinrichtung, die die Lastverteilerplatte im Rückhaltefall aus einer Ausgangsstellung in Richtung Knie bis in eine Rückhaltestellung bewegt.

Sogenannte aktive Knie-Rückhaltevorrichtungen sind angedacht, um die Sitzposition des Insassen im Rückhaltefall zu stabilisieren und eine Bewegung der unteren Extremitäten weitgehend zu verhindern. Die Lastverteilerplatte wird mittels eines Gassacks, der die Antriebseinrichtung bildet und zwischen Lastvertcilerplatte und Armaturentafel angeordnet ist, in Richtung Knie des Insassen bewegt. Die Rückhalte-Stellung wird mittels Fangbändern definiert, welche die Lastverteilerplatte mit der Armaturentafel verbinden. Die Fangbänder können auch so angeordnet sein, daß sie die Bewegungsrichtung der Lastverteilerplatte mitsteuern. Eine solche gattungsbildende Vorrichtung ist beispielsweise aus DE-C-197 30 397 bekannt.

Die in den Fußraum ragende Lastverteilerplatte kann bei einem Sekundäraufprall oder beim Verlassen des Fahrzeugs nach einem Unfall zu einer Gefährdung führen bzw. hinderlich sein. Die erfindungsgemäße Knie-Rückhaltevorrichtung vermeidet diese Nachteile dadurch, daß sie zusätzlich noch eine Rückzugseinrichtung aufweist, die die Lastverteilerplatte aus der Rückhaltestellung zurück in Richtung Ausgangsstellung bewegt. Die Rückzugseinrichtung kann die Lastverteilerplatte wieder komplett zurück in Richtung Armaturentafel in die Ausgangsstellung ziehen oder nahe an die Ausgangsstellung bringen. Durch dieses Zurückziehen der Lastverteilerplatte wird die Insassengefährdung bei einem Sekundäraufprall vermindert. Die Lastverteilerplatte hat auch nach dem eventuellen Zusammenfallen des Gassacks eine definierte Stellung und erleichtert das Aussteigen oder Bergen des Insassen.

Die Rückzugseinrichtung ist wenigstens ein elastisch nachgiebiges Teil, z.B. eine Feder oder ein elastisches Kunststoffband oder ein elastischer Schlauch. Vorzugsweise sind jedoch mehrere dieser elastischen Teile vorgesehen, und zwar insbesondere an den Rändern oder Ecken der Lastverteilerplatte.

Darüber hinaus kann die Rückzugsmöglichkeit auch eine Energiequelle aufweisen, z.B. eine Druckgasquelle oder eine gespannte Feder. Mittels der Energiequelle kann das Zurückziehen noch schneller und vor allem vorbestimmbar erfolgen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine Querschnittsansicht durch eine erste Ausführungsform der Knie-Rückhaltevorrichtung mit der Lastverteilerplatte in der Ausgangsstellung,
Fig. 2 die Ausführungsform nach Fig. 1 mit der Lastverteilerplatte in der Rückhaltestellung,
Fig. 3 eine zweite Ausführungsform der erfindungsgemäßen Knie-Rückhaltevorrichtung mit der Lastverteilerplatte in der Ausgangsstellung,
Fig. 4 die Ausführungsform nach Fig. 3 mit der Lastverteilerplatte in der Rückhaltestellung,
Fig. 5 eine dritte Ausführungsform der erfindungsgemäßen Knie-Rückhaltevorrichtung mit der Lastverteilerplatte in der Ausgangsstellung,
Fig. 6 die Ausführungsform nach Fig. 5 mit der Lastverteilerplatte in der Rückhaltestellung,
Fig. 7 eine vierte Ausführungsform der erfindungsgemäßen Knie-Rückhaltevorrichtung mit der Lastverteilerplatte in der Ausgangsstellung,
Fig. 8 eine modifizierte Ausführungsform einer Knie-Rückhaltevorrichtung nach der Erfindung mit der Lastverteilerplatte in der Ausgangsstellung und
Fig. 9 die in Fig. 8 gezeigte Knie-Rückhaltevorrichtung mit der Lastverteilerplatte in der Rückhaltestellung.

Bei sämtlichen Ausführungsformen tragen einander entsprechende Teile gleiche Bezugszahlen, so daß bezüglich näherer Erläuterungen zu nachfolgenden Ausführungsformen auf die ausführlicheren Erläuterungen im Zusammenhang mit vorher beschriebenen Ausführungsformen verwiesen werden kann.

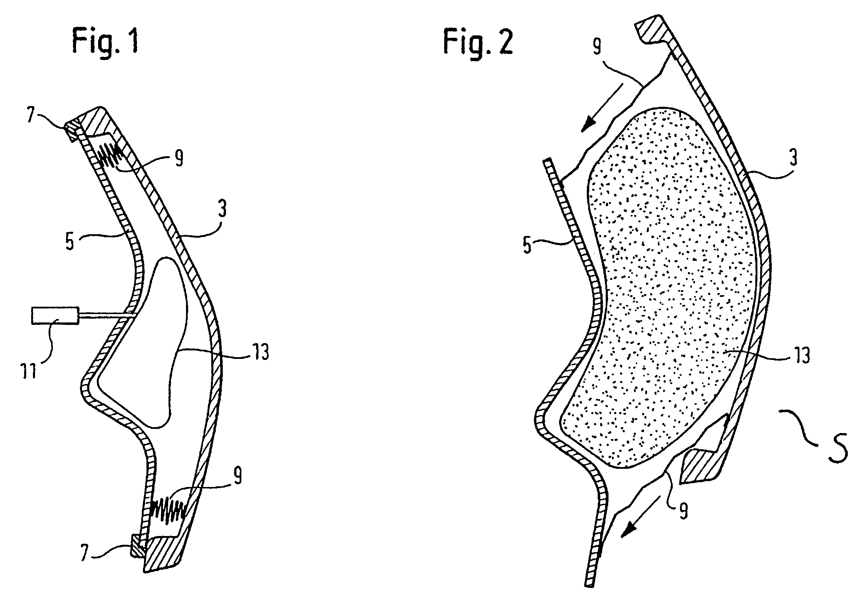

In Fig. 1 ist eine Knie-Rückhaltevorrichtung für Fahrzeuginsassen in einem Schnitt in Fahrzeuglängsrichtung und im im Fahrzeug eingebauten Zustand dargestellt. Der Fahrzeuginnenraum ist in Fig. 2 mit "S" bezeichnet. Die Knie-Rückhaltevorrichtung weist eine Lastverteilerplatte 3 auf, welche Schaumstoffelemente, Deformationsbleche oder Profile enthalten kann und die einen direkten Kontakt mit den Knien des Insassen im Rückhaltefall hat. Mit 5 ist die Armaturentafel des Fahrzeugs bezeichnet, an der die Lastverteilerplatte 3 befestigt ist. Der Begriff Armaturentafel soll so verstanden werden, daß darunter sowohl die Tafel selbst als auch Trägerelemente der Armaturentafel, z.B. Haltebleche oder dergleichen, fallen, wobei das oder die Haltebleche auch Teil eines Gassackmoduls sein können, welches an der Armaturentafel befestigt ist. In der in Fig. 1 gezeigten Ausgangsstellung ist die Lastverteilerplatte 3 an der Armaturentafel 5 z.B. durch elastische Lastverbindungen 7 befestigt, wobei auch jede andere lösbare Befestigung verwendet werden kann. Darüber hinaus sind an den Eckbereichen der eine im wesentlichen langgestreckte viereckige Form aufweisenden Lastverteilerplatte vier Rückzugseinrichtungen in Form von Federn 9 angebracht. Jede Feder hat zwei Enden, wobei ein Ende an der Lastverteilerplatte 3 und das andere an der Armaturentafel 5 befestigt ist. Zwischen der Lastverteilerplatte 3 und der Armaturentafel 5 ist darüber hinaus eine Antriebseinrichtung in Form eines über einen Gasgenerator 11 aufblasbaren Gassacks 13 angeordnet.

Im Rückhaltefall wird der Gasgenerator 11, der nur in Fig. 1 gezeigt ist, aber bei sämtlichen Ausführungsformen vorhanden ist, aktiviert und der Gassack 13 aufgeblasen. Damit wird die Lastverteilerplatte 3 aus ihrer Verankerung gerissen und in Richtung Knie des Insassen in die in Fig. 2 gezeigte Maximalstellung, auch Rückhaltestellung genannt, bewegt. Die Federn 9 dienen gleichzeitig als Fangbänder und begrenzen die Bewegungsstrecke der Lastverteilerplatte 3. Zudem legen sie auch die Bewegungsrichtung der Lastverteilerplatte in die in Fig. 2 gezeigte Rückhaltestellung mit fest. In der in Fig. 2 gezeigten Stellung ist die Lastverteilerplatte nahe der Knie des Insassen, so daß der sich bei einem Unfall nach vorne verlagernde Insasse mit seinen Knien nach kurzer Bewegungsstrecke auf die Lastverteilerplatte trifft, die eine weitere Verlagerung der Knie und damit der gesamten unteren Extremitäten (Oberschenkel und Beckenbereich) weitgehend verhindert.

Der Gassack fällt nach der Rückhaltung zusammen. Die Federn 9 ziehen die Lastverteilerplatte 3 wieder zurück in Richtung zur Ausgangsstellung oder sogar in die Ausgangsstellung selbst, indem sie die Lastverteilerplatte 3 wieder gegen die Armaturentafel 5 drücken. Die Lastverteilerplatte 3 hat damit, nachdem sie der Rückhaltung gedient hat, eine definierte Stellung im Fahrzeug, die von den Knien entfernt ist, so daß sie bei einem Sekundäraufprall keine Gefahr mehr darstellt und auch beim Aussteigen oder Bergen des Insassen nicht im Wege ist.

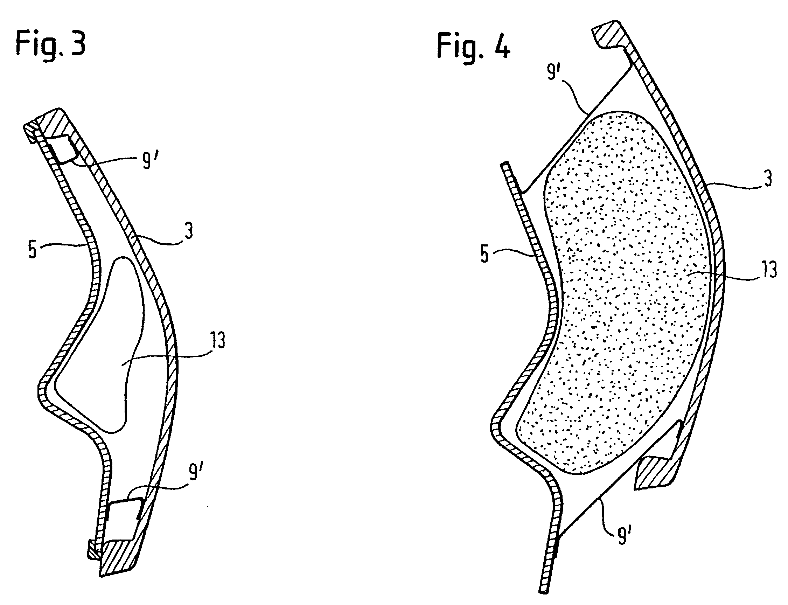

Die in den Figuren 3 und 4 gezeigte Ausführungsform entspricht im wesentlichen der zuvor erläuterten, mit der Ausnahme, daß anstelle der Federn 9 mehrere elastische Kunststoffbänder 9' als Rückzugseinrichtungen vorgesehen sind, die einerseits an der Lastvertcilerplatte 3 und andererseits an der Armaturentafel 5 angebracht sind. Auch die elastischen Kunststoffbänder 9' sind an den Ecken der Lastverteilerplatte 3 angeordnet und dienen einerseits als Fangbänder, die die in Fig. 4 gezeigte Rückhaltestellung definieren. Andererseits dienen sie auch dem Zurückziehen der Lastverteilerplatte 3 nach der Rückhaltung in Richtung zur Ausgangsstellung, die in Fig. 3 dargestellt ist. Die Kunststoffbänder können auch aus einem Verbundmaterial hergestellt sein, z.B. aus mehreren Kunststoffen unterschiedlicher Elastizität. Darüber hinaus können in den Kunststoffbändern auch z.B. Abschnitte oder Fäden integriert sein, die eine hohe Tragfähigkeit aber eine geringe Elastizität haben, so daß sie die Rückhaltestellung definieren und die elastischen Abschnitte oder elastischen Fäden dann dem Zurückziehen der Lastverteilerplatte 3 dienen. Darüber hinaus können natürlich auch separate Fangbänder und getrennt davon Federn oder elastische Kunststoffbänder vorgesehen sein.

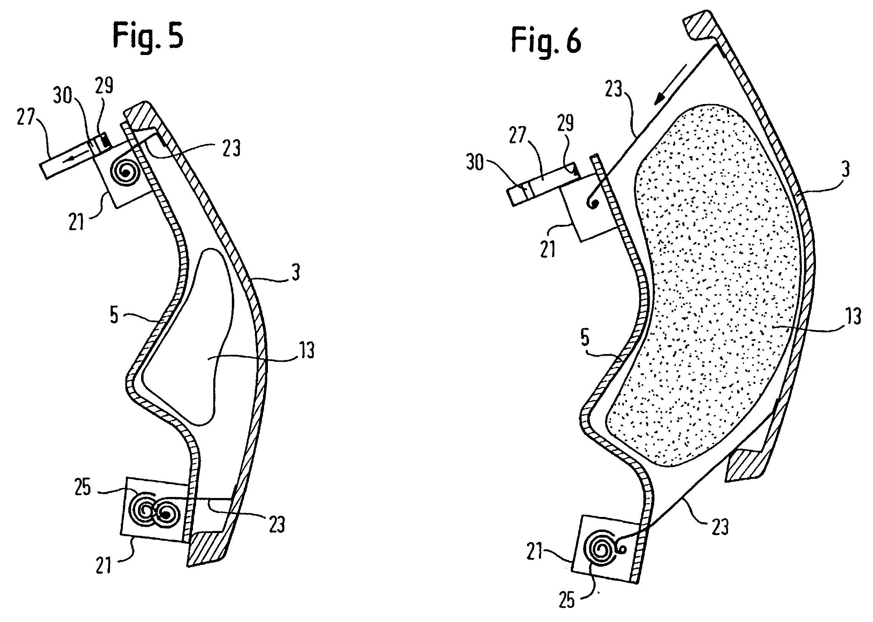

Bei der in den Figuren 5 und 6 dargestellten Ausführungsform sind mehrere Aufrolleinrichtungen für flexible, aber wenig elastische Bänder 23 vorgesehen, die an den Ecken der Lastverteilerplatte 3 befestigt sind. Die Aufrolleinrichtungen 21 sind hinter der Armaturentafel 5 angeordnet und an dieser angebracht. Sie können ähnlich wie ein Fahrzeugsicherheitsgurtaufroller wirken und die Bewegung der Lastverteilerplatte 3 im Rückhaltefall begrenzen, also die Rückhaltestellung definieren und anschließend die Lastverteilerplatte 3 wieder in Richtung zur Ausgangsstellung zurückziehen. Damit dieses Zurückziehen schnell erfolgt, hat jede Aufrolleinrichtung 21 eine ihr zugeordnete Energiequelle, z.B. eine gespannte Feder 25, wie z.B. eine Spiralfeder oder eine Druckgasquelle 27, die wie ein Gurtstraffer aufgebaut ist und eine pyrotechnische Ladung 29 enthält, die einen Kolben 31 antreibt, welcher mit einer Aufrollerwelle gekoppelt ist, auf die das Band 23 aufgerollt wird.

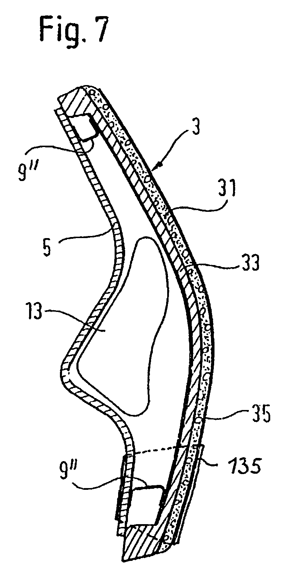

Die in Fig. 7 dargestellte Ausführungsform entspricht im wesentlichen der in Fig. 3 dargestellten. Bei dieser Ausführungsform besteht die Lastverteilerplatte 3 aus mehreren sandwichartig zusammengesetzten und hintereinander angeordneten Platten 31, 33. Die Platte 31 kann z.B. besonders elastisch sein und eine hohe Dämpfung aufweisen, wogegen die Platte 33 sozusagen der Befestigung oder der Stabilisierung dient. Damit die Platten 31, 33 aneinander befestigt sind, werden sie von einem elastischen Kunststoffschlauch 35 umgeben, der über beide Platten 31, 33 gestülpt ist. Der Kunststoffschlauch 35 hat Fortsätze 9", die wie die elastischen Kunststoffbänder 9' in den Figuren 3 und 4 angeordnet sind und wie diese wirken und an der Armaturentafel 5 befestigt sind. Alternativ können auch mehrere separate Kunststoffschläuche vorgesehen sein, die als Rückzugseinrichtungen dienen. Die elastischen Kunststoffbänder können entweder rückseitig an der Lastverteilerplatte 3 befestigt sein, diese vorderseitig umschließen oder in sie eingebettet sein.

Gemäß einer weiteren, in Fig. 7 am unteren Ende der Rückhalteeinrichtung abschnittsweise dargestellten Ausführungsform kann die Lastverteilerplatte eine geschäumte Außenoberfläche haben, die mittels einer Folie zum Fahrzeuginnenraum verdeckt ist. Die Folie 135 ersetzt den Kunststoffschlauch 35 und wird mit der Armaturentafel verbunden und dient als Rückzugseinrichtung, indem sie sich elastisch, ggf. breichsweise auch plastisch, dehnt, wenn der Gassack 13 entfaltet wird. Die Folie 135 kann auch mit einem Kunststoff, der in der Figur durch die Zwischenplatte 31 symbolisiert ist, hinterspritzt, hinterpreßt oder auf einen Kunststoff geklebt sein, wobei der Kunststoff vorzugsweise eine elastische Zwischenschicht bildet. Die Kunststoffbänder 9" können bei dieser Ausführungsform weggelassen werden.

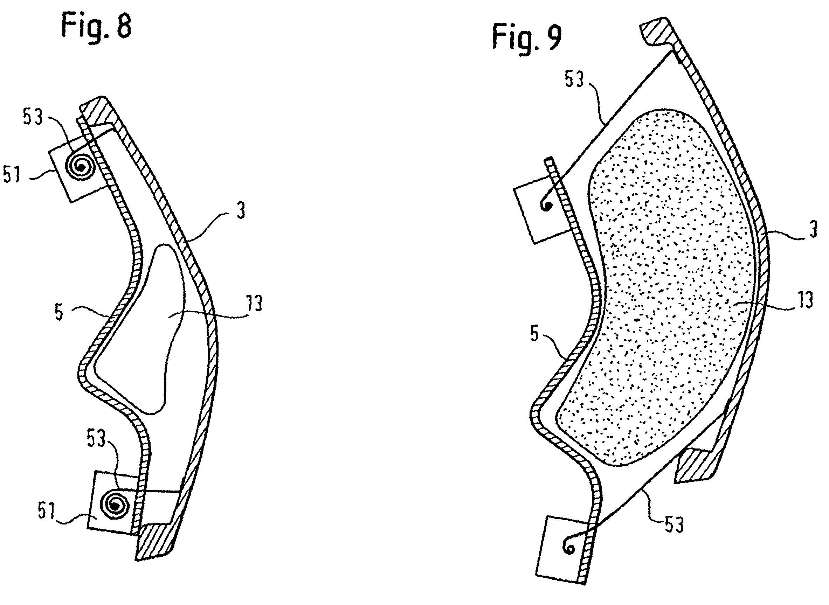

Die in den Figuren 8 und 9 dargestellte Ausführungsform unterscheidet sich von den zuvor beschriebenen dadurch, daß keine Rückzugseinrichtung vorgesehen ist. Vielmehr sind Halte- und Dämpfungsvorrichtungen 51 an den Ecken der Lastverteilerplatte 3 angeordnet. Diese bestehen aus je einem aufgerollten Metallband 53, welches an der Lastverteilerplatte 3 befestigt ist. Nach dem Verschieben der Lastverteilerplatte 3 in die Rückhaltestellung nach Fig. 4 bleibt die Lastverteilerplatte 3 in dieser Stellung, selbst wenn der Gassack 13 schon teilweise zusammenfällt. Die Metallbänder 53, die bei der Bewegung der Lastverteilerplatte 3 in die Rückhaltestellung abgewickelt wurden, halten die Lastverteilerplatte 3 nämlich in der Rückhaltestellung. Bei einem Sekundäraufprall verformen sich die Metallbänder 53 und dienen der Dämpfung.

Anstelle eines Metallbandes kann auch eine Kolben-Zylinder-Dämpfungseinrichtung vorgesehen sein, so daß die Lastverteilerplatte durch die Kolben-Zylinder-Dämpfungseinrichtung mit Lincarführungen in der Rückhaltestellung gehalten wird. Bei einem Sekundäraufprall können z.B. die Kolbenstangen bewußt plastisch deformiert werden und den Aufprall dämpfen.

## Patentansprüche

1. Knie-Rückhaltevorrichtung für Fahrzeuge, mit
einer Lastverteilerplatte (3) für den direkten Kontakt mit den Knien des Insassen und
einer Antriebseinrichtung, die die Lastverteilerplatte (3) im Rückhaltefall aus einer Ausgangsstellung in Richtung Knie bis in eine Rückhaltestellung bewegt, **gekennzeichnet durch**
eine Rückzugseinrichtung (9), die die Lastverteilerplatte (3) aus der Rückhaltestellung zurück in Richtung Ausgangsstellung bewegt.

2. Knie-Rückhaltevorrichtung nach Anspruch 1, **dadurch gekennzeichnet, daß** die Antriebseinrichtung ein Gassack (13) ist, der zwischen Lastverteilerplatte (3) und Armaturentafel (5) angeordnet ist.

3. Knie-Rückhaltevorrichtung nach Anspruch 1 oder 2, **dadurch gekennzeichnet, daß** die Rückzugseinrichtung (9) wenigstens ein elastisch nachgiebiges Teil aufweist.

4. Knie-Rückhaltevorrichtung nach Anspruch 3, **dadurch gekennzeichnet, daß** das elastisch nachgiebige Teil eine Feder (9), ein elastisches Kunststoffband (9') oder ein elastischer Schlauch (9") ist.

5. Knie-Rückhaltevorrichtung nach einem der vorhergehenden Ansprüche, **dadurch gekennzeichnet, daß** das elastisch nachgiebige Teil eine Folie (135) ist.

6. Knie-Rückhaltevorrichtung nach Anspruch 5, **dadurch gekennzeichnet, daß** die Folie (135) die dem Fahrzeuginnenraum zugewandte Seite der Lastverteilerplatte nach außen abdeckt und an der Armaturentafel (5) befestigt ist.

7. Knie-Rückhaltevorrichtung nach Anspruch 6, **dadurch gekennzeichnet, daß** zwischen Folie (135) und Lastverteilerplatte eine nachgiebige Zwischenschicht vorgesehen ist.

8. Knie-Rückhaltevorrichtung nach einem der vorhergehenden Ansprüche, **dadurch gekennzeichnet, daß** die Rückzugseinrichtung eine Energiequelle (25) aufweist, deren Energie dem Zurückziehen der Lastverteilerplatte (3) in Richtung Ausgangsstellung dient.

9. Knie-Rückhaltevorrichtung nach Anspruch 8, **dadurch gekennzeichnet, daß** die Energiequelle eine Druckgasquelle oder eine gespannte Feder (25) ist.

10. Knie-Rückhaltevorrichtung nach einem der vorhergehenden Ansprüche, **dadurch gekennzeichnet, daß** die Rückzugseinrichtung so ausgebildet ist, daß sie die Bewegungsstrecke der Lastverteilerplatte in Richtung Knie begrenzt.

11. Knie-Rückhaltevorrichtung nach einem der vorhergehenden Ansprüche, **dadurch gekennzeichnet, daß** die Rückzugseinrichtung wenigstens eine Aufrolleinrichtung (21) zum Zurückziehen der Lastverteilerplatte (3) aufweist.

12. Knie-Rückhaltevorrichtung nach einem der vorhergehenden Ansprüche, **dadurch gekennzeichnet, daß** die Lastverteilerplatte (3) aus mehreren aneinander befestigten Platten (31, 33) besteht, wobei ein elastischer Kunststoffschlauch die Platten (31, 33) zusammenhält und sie umgibt.

## Claims

1. A knee restraint device for vehicles, comprising
a load distribution plate (3) for direct contact with the knees of the occupant, and
a drive means which in the case of restraint moves the load distribution plate (3) from a starting position towards the knees as far as to a restraint position,
**characterized by**
a retracting means (9) which moves the load distribution plate (3) from the restraint position back towards the starting position.

2. The knee restraint device as claimed in claim 1, **characterized in that** the drive means is a gas bag (13), which is disposed between the load distribution plate (3) and the dashboard (5).

3. The knee restraint device as claimed in claim 1 or 2, **characterized in that** the retracting means (9) has at least one elastically resilient member.

4. The knee restraint device as claimed in claim 3, **characterized in that** the elastically resilient member is a spring (9), an elastic plastic strap (9') or an elastic tube (9").

5. The knee restraint device as claimed in any of the preceding claims, **characterized in that** the elastically resilient member is a foil (135).

6. The knee restraint device as claimed in claim 5, **characterized in that** the foil (135) externally covers the side of the load distribution plate facing the vehicle interior space and is fastened to the dashboard (5).

7. The knee restraint device as claimed in claim 6, **characterized in that** a resilient intermediate layer is provided between the foil (135) and the load distribution plate.

8. The knee restraint device as claimed in any of the preceding claims, **characterized in that** the retracting means has an energy source (25) whose energy serves to retract the load distribution plate (3) towards the starting position.

9. The knee restraint device as claimed in claim 8, **characterized in that** the energy source is a compressed gas source or a spring (25) under tension.

10. The knee restraint device as claimed in any of the preceding claims, **characterized in that** the retracting means is designed such that it limits the travel of the load distribution plate towards the knees.

11. The knee restraint device as claimed in any of the preceding claims, **characterized in that** the retracting means has at least one wind-up means (21) for retracting the load distribution plate (3).

12. The knee restraint device as claimed in any of the preceding claims, **characterized in that** the load distribution plate (3) consists of several plates (31, 33) attached to each other, an elastic plastic tube holding the plates (31, 33) together and surrounding the same.

## Revendications

1. Dispositif de retenue des genoux pour des véhicules, comportant
une plaque de répartition de charge (3) pour le contact direct avec les genoux du passager et
un dispositif d'entraînement qui, en cas de retenue, déplace la plaque de répartition de charge (3) depuis une position initiale en direction des genoux jusque dans une position de retenue,
**caractérisé par**
un système de retour en arrière (9) qui déplace la plaque de répartition de charge (3) depuis la position de retenue en retour en direction de la position initiale.

2. Dispositif de retenue des genoux selon la revendication 1, **caractérisé en ce que** le dispositif d'entraînement est un coussin à gaz (13) qui est agencé entre la plaque de répartition de charge (3) et le tableau de bord (5).

3. Dispositif de retenue des genoux selon la revendication 1 ou 2, **caractérisé en ce que** le système de retour en arrière (9) présente au moins une partie élastiquement souple.

4. Dispositif de retenue des genoux selon la revendication 3, **caractérisé en ce que** la partie élastiquement souple est un ressort (9), une bande en matière plastique élastique (9') ou un tuyau élastique (9").

5. Dispositif de retenue des genoux selon l'une des revendications précédentes, **caractérisé en ce que** la partie élastiquement souple est une feuille (135).

6. Dispositif de retenue des genoux selon la revendication 5, **caractérisé en ce que** la feuille (135) recouvre vers l'extérieur la face de la plaque de répartition de charge qui est tournée vers l'intérieur du véhicule et **en ce qu'**elle est fixée au tableau de bord.

7. Dispositif de retenue des genoux selon la revendication 6, **caractérisé en ce qu'**il est prévu une couche intermédiaire souple entre la feuille (135) et la plaque de répartition de charge.

8. Dispositif de retenue des genoux selon l'une des revendications précédentes, **caractérisé en ce que** le système de retour en arrière présente une source d'énergie (25) dont l'énergie sert au retrait de la plaque de répartition de charge (3) en direction de la position initiale.

9. Dispositif de retenue des genoux selon la revendication 8, **caractérisé en ce que** la source d'énergie est une source de gaz sous pression ou un ressort (25) tendu.

10. Dispositif de retenue des genoux selon l'une des revendications précédentes, **caractérisé en ce que** le système de retour en arrière est réalisé de telle sorte qu'il limite le trajet de mouvement de la plaque de répartition de charge en direction des genoux.

11. Dispositif de retenue des genoux selon l'une des revendications précédentes, **caractérisé en ce que** le système de retour en arrière présente au moins un système d'enroulement (21) pour faire revenir la plaque de répartition de charge (3).

12. Dispositif de retenue des genoux selon l'une des revendications précédentes, **caractérisé en ce que** la plaque de répartition de charge (3) est constituée par plusieurs plaques (31, 33) fixées les unes aux autres, un tuyau de matière plastique élastique retenant les plaques (31, 33) l'une à l'autre et entourant celles-ci.
